# EUROPEAN PATENT APPLICATION

(11) **EP 3 808 822 A1**
(43) Date of publication of application: **21.04.2021**
(21) Application number: 19900691.7
(22) Date of filing: 26.08.2019
(51) Int. Cl.: C09D 1/00, C09D 7/20, C09D 7/63

(54) **ZIRCONIUM-CONTAINING ALCOHOL SOLUTION**

(30) Priority: 21.12.2018 JP 2018239634
(71) Applicant: Daiichi Kigenso Kagaku Kogyo Co., Ltd., Osaka-shi, Osaka 541-0041 (JP)
(72) Inventor: NIWA,Tadahiro, Osaka-shi, Osaka 559-0025 (JP); YAGISHITA,Sadahiro, Osaka-shi, Osaka 559-0025 (JP); MORISHITA,Masanori, Yonezawa-shi, Yamagata 992-8510 (JP); SAKAI,Tetsuo, Yonezawa-shi, Yamagata 992-8510 (JP)
(74) Representative: Cabinet Beau de Loménie
(86) International application number: PCT/JP2019/033346
(87) International publication number: WO 2020/129306

(57) **Abstract**

The present invention provides a zirconium-containing alcohol solution including zirconium oxyacetate, a C1-3 carboxylic acid or a C1-3 carboxylate, water, and an alcohol-based solvent, the zirconium-containing alcohol solution being such that the transmittance for light of a wavelength of 380 nm after heating for 50 hours at a temperature of 40°C is 90-100%.

## Description

### TECHNICAL FIELD

The present invention relates to a zirconium-containing alcohol solution.

### BACKGROUND ART

Zirconium oxide is used as a surface coating material for various materials because it has excellent chemical stability and durability. Conventionally, as a method for forming a coating film using zirconium oxide, a method has been known, in which a zirconium-containing coating liquid adjusted to obtain a coating film is applied onto the surface of an object to be coated, and the coating film is formed through steps such as drying and heating treatments.

As such a coating liquid, Patent Document 1 discloses a high-temperature oxidation resistant ceramic coating liquid for stainless steel which is composed of a polymer containing a Zr-O-Zr bond as a main chain and an OCOR group as a side chain (where R represents a linear or branched alkyl group having 1 to 4 carbon atoms), and obtained by dissolving a zirconium oxide precursor gel-like product in a carboxylic acid and an organic solvent (in particular, see claim 1). Patent Document 1 describes that a zirconium oxide-based precursor polymer gel solid material is extremely stable in moisture in the atmosphere for a long period of time because almost no unreacted alkoxy groups are present (in particular, see paragraph [0006]).

### PRIOR ART DOCUMENT

### PATENT DOCUMENT

Patent Document 1: JP-A-06-101067

### DISCLOSURE OF THE INVENTION

### PROBLEMS TO BE SOLVED BY THE INVENTION

However, the coating liquid of Patent Document 1 is not colorless and transparent. In this regard, as a result of diligent studies, the present inventors found that the coating liquid of Patent Document 1 contains unreacted alkoxy groups, so that the coating liquid cannot be colorless and transparent even if the amount thereof is small. According to the verification of the present inventors, the coating liquid of Patent Document 1 has a yellowish transparent color.

Here, the present inventors have considered that, if the coating liquid is colorless and transparent, the original color of an object to be coated can be kept as it is as much as possible even after the coating liquid is applied, and the design property of the object to be coated may be further improved. The present inventors have considered that the coating liquid may be preferably colorless and transparent when the coating liquid is distributed.

The present invention has been made in view of the above-mentioned problems, and an object thereof is to provide a zirconium-containing alcohol solution capable of keeping the original color of the object to be coated as it is as much as possible and further improving the design property of the object to be coated.

### MEANS FOR SOLVING THE PROBLEMS

The present inventors have diligently studied a zirconium-containing alcohol solution. As a result, the present inventors have found that the adoption of the following configuration makes it possible to provide a zirconium-containing alcohol solution capable of keeping the original color of the object to be coated as it is as much as possible and further improving the design property of the object to be coated, and have completed the present invention.

That is, a zirconium-containing alcohol solution according to the present invention contains:
zirconium oxyacetate; a carboxylic acid having 1 to 3 carbon atoms or a carboxylate having 1 to 3 carbon atoms; water; and an alcohol-based solvent,
wherein the zirconium-containing alcohol solution has a transmittance for light having a wavelength of 380 nm after heating for 50 hours at a temperature of 40°C of 90% or more and 100% or less.

According to the above configuration, the zirconium oxyacetate, the carboxylic acid having 1 to 3 carbon atoms or the carboxylate having 1 to 3 carbon atoms, the water, and the alcohol-based solvent are contained, whereby a solution state containing zirconium can be provided.

The transmittance for light having a wavelength of 380 nm after heating for 50 hours at a temperature of 40°C is 90% or more and 100% or less, so that the zirconium-containing alcohol solution can be said to be colorless and transparent even after long-term storage. "Heating for 50 hours at a temperature of 40°C" is intended for an accelerated test during long-term storage. It also assumes a situation where the zirconium-containing alcohol solution is left for about two hot days (room temperature: around 40°C) .

According to the above constitution, the zirconium-containing alcohol solution contains the carboxylic acid having 1 to 3 carbon atoms or the carboxylate having 1 to 3 carbon atoms, whereby the gelation of the zirconium-containing alcohol solution during storage can be suppressed. Regarding this point, the present inventors assume the following:
It is considered that, in a solution containing zirconium oxyacetate, an alcohol-based solvent, and water, the zirconium oxyacetate gradually hydrolyzes even during storage, to produce zirconium hydroxide, resulting in the gelation of the solution. Then, the carboxylic acid having 1 to 3 carbon atoms or the carboxylate having 1 to 3 carbon atoms are added. This make it possible to prevent hydrolysis through the reaction between the zirconium oxyacetate and the alcohol from proceeding as much as possible.

Thus, according to the above-mentioned configuration, the zirconium-containing alcohol solution has excellent long-term storage property, and is colorless and transparent even after long-term storage. Therefore, the use of the zirconium-containing alcohol solution makes it possible to keep the original color of an object to be coated as it is as much as possible, and further improve the design property of the object to be coated.

In the above configuration, a content of zirconium with respect to the entire zirconium-containing alcohol solution is preferably 0.5 mass% or more and 10 mass% or less.

In the above configuration, even if the content of zirconium is 0.5 mass% or more, the transmittance can be set to 90% or more and 100% or less. Therefore, if the content of zirconium is 0.5 mass% or more, a zirconium-containing alcohol solution having a high zirconium concentration and high transparency can be provided. If the content of zirconium is 10 mass% or less, the content ratio of the alcohol solution can be relatively increased, whereby the drying property of the alcohol solution after being applied onto the object to be coated is more excellent.

In the above configuration, a molar ratio of carboxylate ions to zirconium ([carboxylate ions]/[zirconium]) is preferably 1.5 or more and 10.0 or less.

If the molar ratio ([carboxylate ions]/[zirconium]) is 1.5 or more, a certain amount of carboxylate ions are contained, whereby the long-term storage property of the zirconium-containing alcohol solution is more excellent. When the molar ratio ([carboxylate ions]/[zirconium]) is 10 or less, the amount of the carboxylate does not become excessive, whereby the roughness of the coating film derived from the carboxylate can be suppressed.

In the above configuration, a content of the alcohol-based solvent with respect to the entire zirconium-containing alcohol solution is preferably 50 mass% or more and 95 mass% or less.

When the content of the alcohol-based solvent is 50 mass% or more and the content of the alcohol-based solvent is high, the drying property of the zirconium-containing alcohol solution after being applied onto the object to be coated is excellent, whereby a good coated film is likely to be obtained. If the content of the alcohol-based solvent is 95 mass% or less, the content of zirconium can be increased. In particular, the zirconium-containing alcohol solution contains the carboxylic acid or the carboxylate, so that the hydrolysis due to the reaction between the zirconium oxyacetate and the alcohol does not proceed so much even if the zirconium-containing alcohol solution contains a large amount of the alcohol-based solvent. Therefore, the long-term storage property of the zirconium-containing alcohol solution can be maintained even if the zirconium-containing alcohol solution contains the alcohol-based solvent in a large amount of 50 mass% or more.

In the above configuration, a counter cation of the carboxylic acid or the carboxylate is preferably a cation of a Group 1 element.

If the counter cation of the carboxylic acid or the carboxylate is a hydrogen ion (H⁺), the roughness of the coating film can be further suppressed. If the counter cation of the carboxylic acid or the carboxylate is a cation of a Group 1 element other than the hydrogen ion, a coating film composed of a composite oxide of zirconium and a Group 1 element can be provided.

In the above configuration, the alcohol-based solvent preferably has a boiling point of 60°C or higher and 100°C or lower.

If the boiling point of the alcohol-based solvent is 100°C or lower, the drying property of the zirconium-containing alcohol solution after being applied onto the object to be coated is more excellent, whereby a better coated film is likely to be obtained. If the boiling point of the alcohol-based solvent is 60°C or higher, the zirconium-containing alcohol solution is easily handled at room temperature.

In the above configuration, the alcohol-based solvent is preferably methanol.

If the alcohol-based solvent is methanol, the drying property of the zirconium-containing alcohol solution after being applied onto the object to be coated is more excellent, whereby a better coated film is likely to be obtained.

### EFFECT OF THE INVENTION

The present invention can provide a zirconium-containing alcohol solution capable of keeping the original color of the object to be coated as it is as much as possible and further improving the design property of the object to be coated.

### BRIEF DESCRIPTION OF THE DRAWINGS

Fig. 1 is an absorption spectrum of a zirconium-containing alcohol solution of each of Example 1 and Comparative Example 2 in a wavelength range of 200 nm to 600 nm.
Fig. 2 is a graph showing the relationship between the mass% of zirconium contained in a zirconium-containing alcohol solution of each of Examples 1 to 3 and Comparative Examples 2 to 6 and a light transmittance at a wavelength of 380 nm.
Fig. 3 is an SEM image of a coating film formed using the zirconium-containing alcohol solution of Example 1.

### MODE FOR CARRYING OUT THE INVENTION

Hereinafter, embodiments of the present invention will be described. However, the present invention is not limited to these embodiments.

### <Zirconium-containing alcohol solution>

A zirconium-containing alcohol solution according to the present embodiment contains zirconium oxyacetate, a carboxylic acid having 1 to 3 carbon atoms or a carboxylate having 1 to 3 carbon atoms, water, and an alcohol-based solvent. The zirconium-containing alcohol solution contains the zirconium oxyacetate, the carboxylic acid having 1 to 3 carbon atoms or the carboxylate having 1 to 3 carbon atoms, the water, and the alcohol-based solvent, whereby a state of a solution containing zirconium can be provided. Therefore, the zirconium-containing alcohol solution can be applied onto an object to be coated. The object to be coated is not particularly limited, and examples thereof include an electronic substrate, a resin sheet, various electrode materials, a ceramic material, and a metal substrate.

The zirconium-containing alcohol solution has a transmittance for light having a wavelength of 380 nm after heating for 50 hours at a temperature of 40°C (hereinafter, also referred to as "light transmittance after storage"), of 90% or more and 100% or less. The light transmittance after storage is preferably 95% or more, and more preferably 98% or more. Since the light transmittance after storage is 90% or more and 100% or less, the zirconium-containing alcohol solution can be said to be colorless and transparent even after long-term storage.

The zirconium-containing alcohol solution preferably has a transmittance for light having a wavelength of 380 nm (hereinafter, also referred to as "initial light transmittance"), of 95% or more and 100% or less. The initial light transmittance is preferably 97% or more, and more preferably 98% or more. The initial light transmittance is a value measured within 30 minutes after the production of the zirconium-containing alcohol solution, and one stored at room temperature (25°C) until the measurement after the production is used. When the initial light transmittance is 90% or more and 100% or less, the zirconium-containing alcohol solution after the production can be said to be more reliably colorless and transparent. That is, the zirconium-containing alcohol solution has a light transmittance after storage, of 90% or more and 100% or less, is colorless and transparent even after storage, and is naturally colorless and transparent even before storage. If the initial light transmittance is 95% or more, the zirconium-containing alcohol solution is more reliably colorless and transparent in a state before storage, which is preferable.

As the zirconium oxyacetate, a commercially available product can be used. Examples of the commercially available product include Zircosol ZA-20 and ZA-30 manufactured by DAIICHI KIGENSO KAGAKU KOGYO CO., LTD. The zirconium oxyacetate can be obtained by adding a soluble zirconium compound (not containing alkoxide) to an acetic acid aqueous solution, followed by heating and dissolving.

The content of zirconium with respect to the entire zirconium-containing alcohol solution is preferably 0.5 mass% or more and 10 mass% or less, more preferably 1 mass% or more and 8 mass% or less, and still more preferably 3 mass% or more and 5 mass% or less. Even if the content of zirconium of the zirconium-containing alcohol solution is 0.5 mass% or more, the light transmittance after storage can be set to 90% or more and 100% or less. Therefore, if the content of zirconium is 0.5 mass% or more, a zirconium-containing alcohol solution having a high zirconium concentration and high transparency can be provided. If the content of zirconium is 10 mass% or less, the content ratio of the alcohol solution can be relatively increased, whereby the drying property of the alcohol solution after being applied onto the object to be coated is more excellent.

Examples of the carboxylic acid having 1 to 3 carbon atoms include formic acid, acetic acid, and propionic acid. Examples of the carboxylate having 1 to 3 carbon atoms include formate, acetate, and propionate. Of these, acetic acid and acetate are preferable from the viewpoint of safety and combustion products . Since the zirconium-containing alcohol solution contains the carboxylic acid having 1 to 3 carbon atoms or the carboxylate having 1 to 3 carbon atoms, the gelation of the zirconium-containing alcohol solution during storage can be suppressed. The carboxylate having 1 to 3 carbon atoms is not zirconium oxyacetate.

The counter cation of the carboxylic acid or the carboxylate is preferably a cation of a Group 1 element. Examples of the Group 1 element include hydrogen, lithium, sodium, potassium, rubidium, cesium, and francium. If the counter cation of the carboxylic acid or the carboxylate is a hydrogen ion (H⁺), the roughness of the coating film can be further suppressed. That is, if the counter cation of the carboxylic acid or the carboxylate is a hydrogen ion (H⁺), carbonate or the like is not produced, so that, when the coated film is heated to form a coating film, the roughness of the coating film caused by the carbonate or the like can be suppressed. When the counter cation of the carboxylate is the hydrogen ion (H⁺), the composition of the coating film is zirconia (zirconium dioxide (ZrO₂)).

If the counter cation of the carboxylic acid or the carboxylate is a cation of a Group 1 element other than the hydrogen ion, a coating film composed of a composite oxide of zirconium and a Group 1 element can be provided.

The molar ratio of carboxylate ions to zirconium ([carboxylate ions]/[zirconium]) is preferably 1.5 or more and 10.0 or less, more preferably 1.8 or more and 6.0 or less, and still more preferably 2.0 or more and 4.0 or less. If the molar ratio ([carboxylate ions]/[zirconium]) is 1.5 or more, a certain amount of carboxylate ions are contained, whereby the long-term storage property of the zirconium-containing alcohol solution is more excellent. When the molar ratio ([carboxylate ions]/[zirconium]) is 10 or less, the amount of the carboxylate does not become excessive, whereby the roughness of the coating film derived from the carboxylate can be suppressed.

The alcohol-based solvent is not particularly limited, but it is preferably liquid at room temperature (25°C). The alcohol-based solvent preferably has a boiling point of 60°C or higher and 100°C or lower, and more preferably 60°C or higher and 90°C or lower. When the boiling point is 100°C or lower, the drying property of the zirconium-containing alcohol solution after being applied onto the object to be coated is more excellent, whereby a better coated film is likely to be obtained. If the boiling point of the alcohol-based solvent is 60°C or higher, the zirconium-containing alcohol solution is easily handled at room temperature.

Specific examples of the alcohol-based solvent include, but are not limited to, methanol, ethanol, 1-propanol, and 2-propanol. Of these, methanol is preferable. If the alcohol-based solvent is methanol, the drying property of the zirconium-containing alcohol solution after being applied onto the object to be coated is more excellent, whereby a better coated film is likely to be obtained.

The content of the alcohol-based solvent with respect to the entire zirconium-containing alcohol solution is preferably 50 mass% or more and 95 mass% or less, more preferably 55 mass% or more and 85 mass% or less, and still more preferably 60 mass% or more and 70 mass% or less. When the content of the alcohol-based solvent is 50 mass% or more and the content of the alcohol-based solvent is high, the drying property of the zirconium-containing alcohol solution after being applied onto the object to be coated is excellent, whereby a good coated film is likely to be obtained. When the content of the alcohol-based solvent is 95 mass% or less, the content of zirconium can be increased. In particular, the zirconium-containing alcohol solution contains the carboxylic acid or the carboxylate, so that the hydrolysis through the reaction between the zirconium oxyacetate and the alcohol does not proceed so much even if the zirconium-containing alcohol solution contains a large amount of the alcohol-based solvent. Therefore, the long-term storage property of the zirconium-containing alcohol solution can be maintained even if the zirconium-containing alcohol solution contains the alcohol-based solvent in a large amount of 50 mass% or more.

### <Method for producing zirconium-containing alcohol solution>

Hereinafter, an example of a method for producing a zirconium-containing alcohol solution will be described. However, the method for producing a zirconium-containing alcohol solution of the present invention is not limited to the following examples.

The zirconium-containing alcohol solution according to the present embodiment can be obtained by mixing zirconium oxyacetate, a carboxylic acid having 1 to 3 carbon atoms or a carboxylate having 1 to 3 carbon atoms, water, and an alcohol-based solvent.

The zirconium oxyacetate may be used in the form of a powder or an aqueous solution (zirconium oxyacetate aqueous solution). When the zirconium oxyacetate aqueous solution is used, the zirconium oxyacetate aqueous solution already contains water, so that water may not be separately added thereto. The zirconium oxyacetate may contain an anion derived from a raw material thereof. Examples of the anion derived from the raw material include a nitrate ion, a carbonate ion, a hydrogen carbonate ion, and a chloride ion.

The mixing order of the zirconium oxyacetate, the carboxylic acid having 1 to 3 carbon atoms or the carboxylate having 1 to 3 carbon atoms, the water, and the alcohol-based solvent is not particularly limited. However, if the zirconium oxyacetate and the alcohol-based solvent are mixed, hydrolysis starts. Therefore, before the zirconium oxyacetate and the alcohol-based solvent are mixed, the zirconium oxyacetate or the alcohol-based solvent is preferably mixed with the carboxylic acid having 1 to 3 carbon atoms or the carboxylate having 1 to 3 carbon atoms in advance . From the above viewpoint, it is preferable that the mixing order is as follows: zirconium oxyacetate and water are first mixed; a carboxylic acid having 1 to 3 carbon atoms or a carboxylate having 1 to 3 carbon atoms is then mixed; and an alcohol-based solvent is finally mixed.

### EXAMPLES

Hereinafter, preferred examples of the present invention will be illustratively described in detail. However, materials and blend amounts and the like described in Examples are not intended to limit the scope of the present invention only to these unless there is a particularly limited description.

A zirconium compound usually contains a hafnium component as an unavoidable component. Hafnium is contained in the above zirconium oxyacetate aqueous solution, powdered zirconium oxyacetate, and zirconium-containing alcohol solutions obtained in Examples 1 to 17 below so that the molar ratio of the hafnium to zirconium (the number of moles of Hf/the number of moles of Zr) is 0.03. Therefore, in Examples 1 to 17 below, the concentration of Zr is represented as the sum of the concentrations of zirconium and hafnium unless otherwise specified. Zr in a composition ratio means the sum of zirconium and hafnium (this also corresponds to Zr in the above (Hf/Zr)).

### <Preparation of zirconium-containing alcohol solution>

### (Example 1)

To 68.40 g of a zirconium oxyacetate aqueous solution (manufactured by DAIICHI KIGENSO KAGAKU KOGYO CO., LTD., Zircosol ZA-20, mass of zirconium with respect to the entire zirconium oxyacetate aqueous solution: 16.24 mass% (mass of Zr in terms of ZrO₂: 20 weight%), 6.82 g of acetic acid was added, followed by stirring for 30 minutes. Then, 74.75 g of methanol was added to the mixture, followed by stirring. From the above, a zirconium-containing alcohol solution according to Example 1 was obtained. The preparation was carried out at room temperature (25°C) . The zirconium-containing alcohol solution according to Example 1 was colorless and transparent.

Table 1 showed the mass% and mol% of zirconium contained in the obtained zirconium-containing alcohol solution, the mass% and mol% of carboxylate ions, the mass% of alcohol, and the mass% of water. The mass% is a value with the entire zirconium-containing alcohol solution as 100%. The mol% is a value with the entire zirconium-containing alcohol solution as 100%.

Furthermore, Table 1 showed the mass ratio of carboxylate ions to zirconium oxide (Li₂ZrO₃ in Examples 9 to 12, Na₂ZrO₃ and ZrO₂ and the like in Example 17, ZrO₂ in other Examples and Comparative Examples) ([carboxylate ions]/[zirconium oxide]) and the molar ratio of carboxylate ions to zirconium ([carboxylate ions]/[zirconium]).

### (Examples 2 to 8)

Zirconium-containing alcohol solutions according to Examples 2 to 8 were obtained in the same manner as in Example 1 except that the addition amount of each of materials was changed so that the mass% of zirconium to be obtained, the mass% of carboxylate ions, the mass% of alcohol, and the mass% of water were shown in Table 1. The zirconium-containing alcohol solutions according to Examples 2 to 8 were colorless and transparent.

### (Examples 9 to 12)

Zirconium-containing alcohol solutions according to Examples 9 to 12 were obtained in the same manner as in Example 1 except that lithium acetate was used instead of acetic acid, and the addition amount of each of materials was changed so that the mass% of zirconium to be obtained, the mass% of carboxylate ions, the mass% of alcohol, and the mass% of water were shown in Table 1. The zirconium-containing alcohol solutions according to Examples 9 to 12 were colorless and transparent.

### (Example 13)

A zirconium-containing alcohol solution according to Example 13 was obtained in the same manner as in Example 1 except that ethanol was used instead of methanol. The zirconium-containing alcohol solution according to Example 13 was colorless and transparent.

### (Example 14)

A zirconium-containing alcohol solution according to Example 14 was obtained in the same manner as in Example 1 except that 1-propanol was used instead of methanol. The zirconium-containing alcohol solution according to Example 14 was colorless and transparent.

### (Example 15)

A zirconium-containing alcohol solution according to Example 15 was obtained in the same manner as in Example 1 except that 2-propanol was used instead of methanol. The zirconium-containing alcohol solution according to Example 15 was colorless and transparent.

### (Example 16)

A zirconium-containing alcohol solution according to Example 16 was obtained in the same manner as in Example 1 except that propionic acid was used instead of acetic acid. The zirconium-containing alcohol solution according to Example 16 was colorless and transparent.

### (Example 17)

A zirconium-containing alcohol solution according to Example 17 was obtained in the same manner as in Example 1 except that sodium acetate was used instead of acetic acid. The zirconium-containing alcohol solution according to Example 17 was colorless and transparent.

### (Comparative Example 1)

A zirconium-containing alcohol solution according to Comparative Example 1 was obtained in the same manner as in Example 1 except that acetic acid was not added, and the addition amount of each of materials was changed so that the mass% of zirconium to be obtained, the mass% of carboxylate ions, the mass% of alcohol, and the mass% of water were shown in Table 1. The zirconium-containing alcohol solution according to Comparative Example 1 was colorless and transparent.

### (Comparative Example 2)

1.83 g (0.030 mol) of acetic acid was weighed in a 50-mL beaker, and 0.41 g (0.023 mol) of pure water was added thereto, followed by stirring for 5 minutes. Then, 10 g (0.023 mol) of zirconium n-propoxide was added to the mixture. The content of zirconium in 10 g of zirconium n-propoxide is 2.09 g. By the above operation, 12.24 g of a precursor gel-like product was obtained.

To the obtained precursor gel-like product, 12.24 g (0.17 mol) of n-butyl alcohol and 1.22 g (0.02 mol) of acetic acid were added to the mixture in this order, but these were not dissolved. Therefore, 1.44 g of water and 1 g of acetic acid were further added to the mixture in this order, followed by dissolving to obtain a zirconium-containing alcohol solution according to Comparative Example 2. The zirconium-containing alcohol solution according to Comparative Example 2 was yellowish.

### (Comparative Examples 3 to 6)

Water was added to the zirconium-containing alcohol solution of Comparative Example 2 so that the mass% of zirconium, the mass% of carboxylate ions, the mass% of alcohol, and the mass% of water were as shown in Table 1, to obtain zirconium-containing alcohol solutions according to Comparative Examples 3 to 6. The zirconium-containing alcohol solutions according to Comparative Examples 3 to 6 were yellowish.

**[Table 1]**

| | CATIONIC SPECIES IN LIQUID | TYPES OF CARBOXYLIC ACIDS | TYPES OF ALCOHOLS | Zr | | CARBOXYLATE IONS | | ALCOHOL | WATER | MASS RATIO [CARBOXYLATE IONS]/ [ZIRCONIUM OXIDE] | MOLAR RATIO [CARBOXYLATE IONS]/ [ZIRCONIUM] | INITIAL LIGHT TRANSMITTANCE % | TRANSMITTANCE % FOR LIGHT HAVING WAVELENGTH OF 380 nm AFTER HEATING FOR 50 HOURS AT 40°C | FLUIDITY AFTER HEATING FOR 20 HOURS AT 45°C |
|---|---|---|---|---|---|---|---|---|---|---|---|---|---|---|
| | | | | mass % | mol% | mass% | mol% | mass% | mass% | | | | | |
| EXAMPLE 1 | H⁺ | ACETIC ACID | METHANOL | 7.41 | 0. 08 | 10.81 | 0.18 | 49.89 | 31. 93 | 1.46 | 2.20 | 97.85 | 97.66 | GOOD |
| EXAMPLE 2 | H⁺ | ACETIC ACID | METHANOL | 3.71 | 0.04 | 5.40 | 0.09 | 74.92 | 15.96 | 1.46 | 2.20 | 98.90 | 98.49 | GOOD |
| EXAMPLE 3 | H⁺ | ACETIC ACID | METHANOL | 0.74 | 0.01 | 1. 08 | 0.02 | 94.99 | 3.19 | 1.46 | 2.20 | 99.90 | 99.47 | GOOD |
| EXAMPLE 4 | H⁺ | ACETIC ACID | METHANOL | 4.80 | 0.05 | 5.43 | 0.09 | 69.04 | 20.72 | 1.13 | 1.72 | N.D. | 96.41 | GOOD |
| EXAMPLE 5 | H⁺ | ACETIC ACID | METHANOL | 4.75 | 0.05 | 6.42 | 0.11 | 68.32 | 20.50 | 1.35 | 2.05 | N.D. | 96.38 | GOOD |
| EXAMPLE 6 | H⁺ | ACETIC ACID | METHANOL | 4.66 | 0.05 | 8.33 | 0.14 | 66.93 | 20. 08 | 1.79 | 2.72 | N.D. | 97.36 | GOOD |
| EXAMPLE 7 | H⁺ | ACETIC ACID | METHANOL | 4.56 | 0.05 | 10.17 | 0.17 | 65.59 | 19. 68 | 2.23 | 3.38 | N.D. | 96.78 | GOOD |
| EXAMPLE 8 | H⁺ | ACETIC ACID | METHANOL | 4.47 | 0.05 | 11.93 | 0.20 | 64.30 | 19.30 | 2.67 | 4.05 | N.D. | 97.65 | GOOD |
| EXAMPLE 9 | H⁺, Li⁺ | ACETIC ACID | METHANOL | 4.80 | 0.05 | 5.47 | 0.09 | 69.02 | 19.03 | 1.14 | 1.73 | N.D. | 95.39 | GOOD |
| EXAMPLE 10 | H⁺, Li⁺ | ACETIC ACID | METHANOL | 4.74 | 0.05 | 6.78 | 0.11 | 68.06 | 18.76 | 1.43 | 2.17 | N.D. | 96.71 | GOOD |
| EXAMPLE 11 | H⁺, Li⁺ | ACETIC ACID | METHANOL | 4.67 | 0.05 | 8.06 | 0.13 | 67.13 | 18.51 | 1.72 | 2.62 | N.D. | 97.24 | GOOD |
| EXAMPLE 12 | H⁺, Li⁺ | ACETIC ACID | METHANOL | 4.61 | 0.05 | 9.30 | 0.15 | 66.22 | 18.26 | 2.02 | 3.06 | N.D. | 99.40 | GOOD |
| EXAMPLE 13 | H⁺ | ACETIC ACID | ETHANOL | 7.41 | 0. 08 | 10.81 | 0.18 | 49.89 | 31. 93 | 1.46 | 2.20 | N.D. | 97.66 | GOOD |
| EXAMPLE 14 | H⁺ | ACETIC ACID | 1-PROPANOL | 7.41 | 0.08 | 10.81 | 0.18 | 49.89 | 31. 93 | 1.46 | 2.20 | N.D. | 97.75 | GOOD |
| EXAMPLE 15 | H⁺ | ACETIC ACID | 2-PROPANOL | 7.41 | 0. 08 | 10.81 | 0.18 | 49.89 | 31. 93 | 1.46 | 2.20 | N.D. | 96.21 | GOOD |
| EXAMPLE 16 | H⁺ | PROPIONIC ACID | METHANOL | 7.41 | 0.08 | 10.81 | 0.18 | 49.89 | 31. 93 | 1.46 | 2.20 | N.D. | 95.04 | GOOD |
| EXAMPLE 17 | H⁺, Na⁺ | ACETIC ACID | METHANOL | 7.41 | 0. 08 | 10.81 | 0.18 | 49.89 | 31. 93 | 1.46 | 2.20 | N.D. | 97.18 | GOOD |
| COMPARATIVE EXAMPLE 1 | H⁺ | ACETIC ACID | METHANOL | 4.87 | 0.05 | 4.12 | 0.07 | 70.00 | 19.30 | 0.85 | 1.29 | N.D. | 90.92 | POOR |
| COMPARATIVE EXAMPLE 2 | H⁺ | ACETIC ACID | PROPANOL AND BUTANOL | 7.80 | 0.09 | 11.30 | 0.19 | 71.60 | 6.60 | 1.45 | 2.20 | 57.00 | N.D. | N.D. |
| COMPARATIVE EXAMPLE 3 | H⁺ | ACETIC ACID | PROPANOL AND BUTANOL | 6.70 | 0.07 | 9.80 | 0.16 | 65.00 | 18.40 | 1.46 | 2.22 | 61.46 | N.D. | N.D. |
| COMPARATIVE EXAMPLE 4 | H⁺ | ACETIC ACID | PROPANOL AND BUTANOL | 5.24 | 0.06 | 7.66 | 0.13 | 69.77 | 15.44 | 1.46 | 2.22 | 70.94 | N.D. | N.D. |
| COMPARATIVE EXAMPLE 5 | H⁺ | ACETIC ACID | PROPANOL AND BUTANOL | 2.60 | 0.03 | 3.77 | 0.06 | 60.29 | 33.30 | 1.45 | 2.20 | 88.31 | N.D. | N.D. |
| COMPARATIVE EXAMPLE 6 | H⁺ | ACETIC ACID | PROPANOL AND BUTANOL | 0.71 | 0.01 | 1. 04 | 0.02 | 95.70 | 2.18 | 1.46 | 2.22 | 94.30 | N.D. | N.D. |

*N.D. = NO DATA

### <Measurement of initial light transmittance>

Initial light transmittances were measured for the zirconium-containing alcohol solutions of Examples and Comparative Examples. Specifically, a spectral haze meter (product name: SH7000 manufactured by Nippon Denshoku Industries Co., Ltd.) was used to obtain the light transmittances at a wavelength of 380 nm. The results are shown in Table 1. In Comparative Examples 2 to 5, the light transmittances at a wavelength of 380 nm were lower than those in Examples. This is considered to be because a zirconium-containing alcohol solution is prepared via a precursor gel-like product having a propoxy group in a side chain, so that zirconium n-propoxide as a raw material remains.

Meanwhile, in Examples 1 to 3, the light transmittances at a wavelength of 380 nm were higher than those in Comparative Examples 2 to 5.

The initial light transmittances are not measured in Examples 4 to 17, but light transmittances after storage are 90% or more even in measurement of light transmittance after storage to be described later, and therefore it is clear that the initial light transmittances are higher than those in Comparative Examples 2 to 5.

### <Verification of zirconium n-propoxide remaining in zirconium-containing alcohol solution of Comparative Example 2>

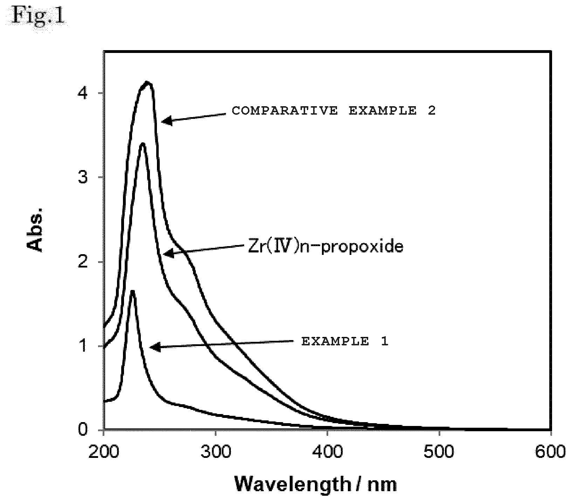

Light absorption spectra were measured for the zirconium-containing alcohol solutions of Example 10 and Comparative Example 2 having the same content of carboxylate ions. Specifically, an ultraviolet/visible spectrophotometer (product name: V-750iRM manufactured by JASCO Corporation) was used to obtain light absorption spectra in a wavelength range of 200 nm to 600 nm. The results are shown in Fig. 1.

Fig. 1 shows the absorption spectra of the zirconium-containing alcohol solutions of Example 1 and Comparative Example 2 and the zirconium n-propoxide (in terms of ZrO₂: 7% by weight) in a wavelength range of 200 nm to 600 nm. As can be seen from Fig. 1, in Comparative Example 2 and zirconium n-propoxide, broad absorption was confirmed over a wavelength of 280 to 350 nm. Meanwhile, in Example 1, such absorption was not observed.

In Example 1 and Comparative Example 2, the water and the alcohol-based solvent contained in the zirconium-containing alcohol solution have no absorption in the wavelength range of 280 to 350 nm. Then, in the comparison of the raw materials of Example 1 and Comparative Example 2, only the zirconium n-propoxide can be considered as a raw material having absorption which may be observed at a wavelength of 280 to 350 nm. That is, this absorption in Comparative Example 2 is considered to be derived from the zirconium n-propoxide as the raw material.

From the above, the zirconium-containing alcohol solution of Comparative Example 2 was considered to be yellowish due to the residual zirconium n-propoxide.

### <Relationship between content of zirconium and light transmittance at wavelength of 380 nm>

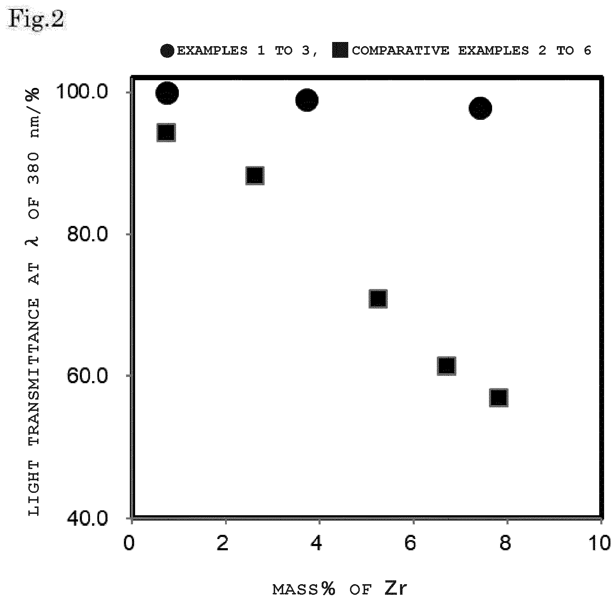

Fig. 2 is a graph showing the relationship between the mass% of zirconium contained in each of the zirconium-containing alcohol solutions of Examples 1 to 3 and Comparative Examples 2 to 6 and a light transmittance at a wavelength of 380 nm. The light transmittance at a wavelength of 380 nm is a value obtained by the above measurement of the initial light transmittance. As shown in Fig. 2, in each of Examples 1 to 3, the light transmittance is close to 100%, and is almost constant regardless of the amount (mass%) of zirconium contained in the zirconium-containing alcohol solution. Meanwhile, in each of Comparative Examples 2 to 5, the light transmittance linearly decreases as the amount of zirconium (mass%) increases. This is considered to be due to the increase in the amount of the zirconium n-propoxide as the raw material.

### <Measurement of light transmittance after storage>

Each of the zirconium-containing alcohol solutions of Examples and Comparative Examples was placed in a bottle with a lid, and heated under a temperature condition of 40°C for 50 hours. Then, the temperature was returned to room temperature (25°C), and a light transmittance was measured. A measuring device and measuring conditions were the same as those in the measurement of the initial light transmittance. Table 1 shows the light transmittances at a wavelength of 380 nm at that time. In each of Comparative Examples 2 to 4, the solution was separated into two phases having different colors of water and butanol with time, and in each of Comparative Examples 5 to 6, a precipitate was precipitated. Therefore, the light transmittance after storage could be not measured.

In Examples, a high transmittance was shown even after heating for 50 hours under the temperature condition of 40°C. The zirconium-containing alcohol solutions of Examples were colorless and transparent in appearance.

### <Evaluation of storage property>

Each of the zirconium-containing alcohol solutions of Examples 1 to 17 and Comparative Example 1 was placed in a bottle with a lid, and heated under a temperature condition of 45°C for 20 hours. By visual observation, the case where the fluidity of the liquid was not significantly changed as compared with that before heating was evaluated as good, and the case where the fluidity was significantly reduced to the extent that the liquid was gelled, and could not be taken out even if the bottle was tilted was evaluated as poor. Comparative Examples 2 to 6 are not evaluated. The results are shown in Table 1.

In Comparative Example 1, a carboxylic acid or a carboxylate was not added, so that the hydrolysis of zirconium oxyacetate was considered to rapidly proceed to produce zirconium hydroxide, which resulted in the gelation of the liquid.

### <Evaluation of coating film>

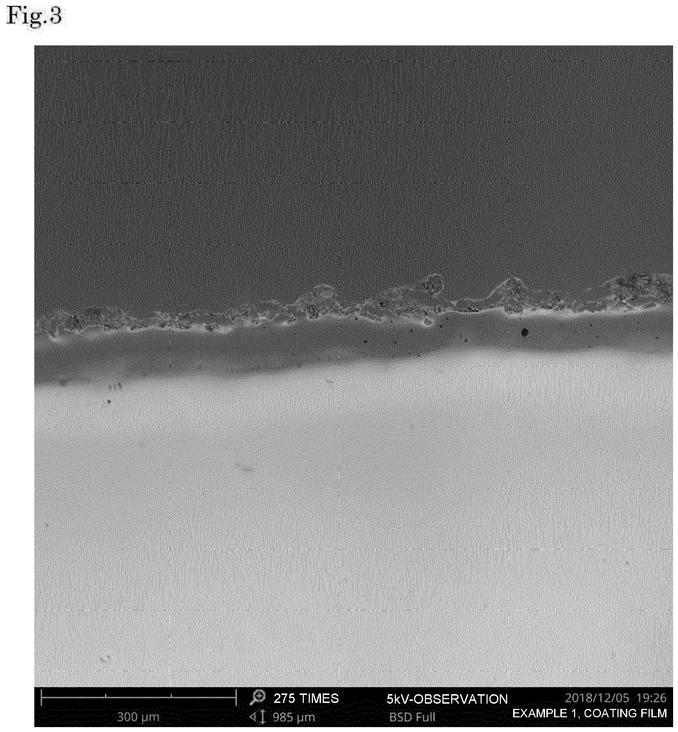

The zirconium-containing alcohol solution of Example 1 was applied onto a glass plate to be coated (applying conditions: spin coating, equipment used: Opticoat MS-B100 manufactured by Mikasa Co., Ltd., rotation speed: 2000 rpm, rotation time: 1 minute), followed by heating and drying at 100°C to obtain a coated film. Then, the coated film was heated at 300°C for 1 hour to obtain a coating film. Fig. 3 is a Scanning Electron Microscope (SEM) image of a coating film formed using the zirconium-containing alcohol solution of Example 1. A region having dark contrast in an upper part of Fig. 3 is a region where a glass substrate to be coated is exposed, and a region having bright contrast in a lower part of Fig. 3 is a region where the coating film is coated. As shown in Fig. 3, a good coating film could be confirmed to be obtained using the zirconium-containing alcohol solution of Example 1. Although not shown, SEM images generally similar to those in Fig. 3 were obtained even in other Examples, and a good coating film could be confirmed to be obtained.

## Claims

1. A zirconium-containing alcohol solution comprising:
zirconium oxyacetate;
a carboxylic acid having 1 to 3 carbon atoms or a carboxylate having 1 to 3 carbon atoms;
water; and
an alcohol-based solvent,
wherein the zirconium-containing alcohol solution has a transmittance for light having a wavelength of 380 nm after heating for 50 hours at a temperature of 40°C of 90% or more and 100% or less.

2. The zirconium-containing alcohol solution according to claim 1, wherein a content of zirconium with respect to an entire zirconium-containing alcohol solution is 0.5 mass% or more and 10 mass% or less.

3. The zirconium-containing alcohol solution according to claim 1 or 2, wherein a molar ratio of carboxylate ions to zirconium ([carboxylate ions]/[zirconium]) is 1.5 or more and 10.0 or less.

4. The zirconium-containing alcohol solution according to any one of claims 1 to 3, wherein a content of the alcohol-based solvent with respect to an entire zirconium-containing alcohol solution is 50 mass% or more and 95 mass% or less.

5. The zirconium-containing alcohol solution according to any one of claims 1 to 4, wherein a counter cation of the carboxylate is a cation of a Group 1 element.

6. The zirconium-containing alcohol solution according to any one of claims 1 to 5, wherein the alcohol-based solvent has a boiling point of 60°C or higher and 100°C or lower.

7. The zirconium-containing alcohol solution according to any one of claims 1 to 6, wherein the alcohol-based solvent is methanol.
